# EUROPEAN PATENT APPLICATION

(11) **EP 3 057 369 A1**
(43) Date of publication of application: **17.08.2016**
(21) Application number: 14852630.4
(22) Date of filing: 03.10.2014
(51) Int. Cl.: H04W 72/04

(54) **MOBILE STATION AND WIRELESS BASE STATION**

(30) Priority: 11.10.2013 JP 2013213856
(71) Applicant: NTT DOCOMO, INC., Chiyoda-ku Tokyo 100-6150 (JP)
(72) Inventor: UCHINO, Tooru, Tokyo 100-6150 (JP); UMEDA, Hiromasa, Tokyo 100-6150 (JP); YAGYU, Kengo, Tokyo 100-6150 (JP)
(74) Representative: Hoffmann Eitle
(86) International application number: PCT/JP2014/076540
(87) International publication number: WO 2015/053187

(57) **Abstract**

The present invention prevents the occurrence of interference in an uplink in a case of adding a "UL Scell" while CA is being performed using a Pcell and a "DL Scell. " A mobile station UE according to the present invention is configured such that, in a case where the mobile station UE adds a "UL Scell" while performing CA by using a Pcell and a "DL Scell", the mobile station UE suspends signal transmission using the "UL Scell" for a predetermined length of time even if the "DL Scell is in an active state.

## Description

### TECHNICAL FIELD

The present invention relates to a mobile station and a radio base station.

### BACKGROUND ART

In LTE (Long Term Evolution)-Advanced, a mobile station UE is configured to be capable of performing CA (Carrier Aggregation) by using multiple cells (or CCs: Component Carriers).

When CA is performed, a Pcell (Primary cell), which is a highly reliable cell for guaranteeing connectivity, and an Scell (Secondary cell), which is a subordinate cell, are configured for the mobile station UE.

The mobile station UE connects primarily to a Pcell and can add an Scell when necessary.

The Pcell is a cell similar to an LTE cell that supports RLM (Radio Link Monitoring), SPS (Semi-Persistent Scheduling), and the like. Changing the Pcell of the mobile station UE requires a handover process.

Also, the Scell is a cell configured for the mobile station UE in addition to the Pcell. The addition and removal of the Scell are performed by means of RRC (Radio Resource Control) signaling.

The Scell is a cell that is in a non-active state (deactive state) immediately after it is configured for the mobile station UE, and is enabled to perform communication (enabled to be scheduled) only after activation at an MAC (Media Access Control) layer.

In other words, the Scell is either in the active state or in the non-active state (see Non-patent document 1, for example). Here, the active state is a state which permits communication whereas the non-active state is a state which does not permit communication but enables battery saving.

In particular, the mobile station UE is prescribed to perform the following actions upon receipt of an "Activate command" for the Scell:
- receiving a signal transmitted through a PDCCH (Physical Downlink Control Channel) in the Scell
- performing "CSI (Channel State Indicator) reporting" in the Scell
- transmitting an SRS (Sounding Reference Singal) in the Scell
- activating or reactivating an "sCellDeactivationTimer"
- triggering a PHR (Power Head Room) in the Scell in which an uplink is configured.

Here, the mobile station UE reports the PHRs of the Pcell and the Scell in the active state.

### PRIOR ART DOCUMENT

### NON-PATENT DOCUMENT

Non-patent document 1: 3GPP TS36.321

### SUMMARY OF THE INVENTION

However, the applicant and the inventors of the present application have found the following problem in the above LTE.

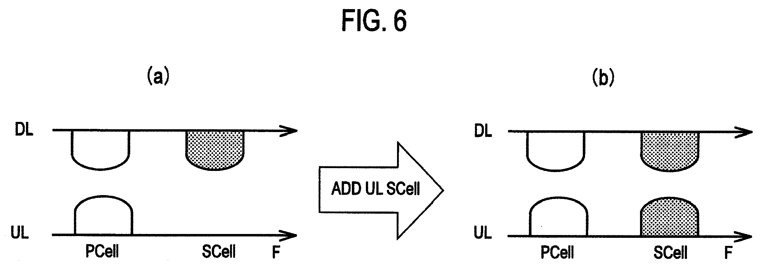

Specifically, in a case where the mobile station UE adds a "UL Scell" as shown in Part (b) of Fig. 6 while performing CA by using a Pcell and a "DL Scell" as shown in Part (a) of Fig. 6, a command to add the "UL Scell" is performed at an RRC (Radio Resource Control) layer. However, even when the Scell configuring process (parameter configuring process) at the RRC layer is finished, there may possibly be a period when the configuration at an RF (physical layer) is not completed, depending on the process delay in the mobile station UE.

Here, the state of the Scell (active state or non-active state) is common to the "DL Scell" and the "UL Scell". For this reason, in the above case, if the "DL Scell" is already in the active state, the "UL Scell" is capable of transmitting the SRS, signals to be transmitted through a PUSCH (Physical Uplink Shared Channel), and the like immediately after the completion of the Scell configuring process at the RRC layer.

Note that the "DL Scell" is an Scell used exclusively for the downlink while the "UL Scell" is an Scell used exclusively for the uplink.

During the above period when the configuration at the RF is not completed, the mobile station UE may transmit an uplink signal, which may appear to a radio base station eNB as if a strange signal is transmitted. This leads to a problem in that interference occurs in the uplink.

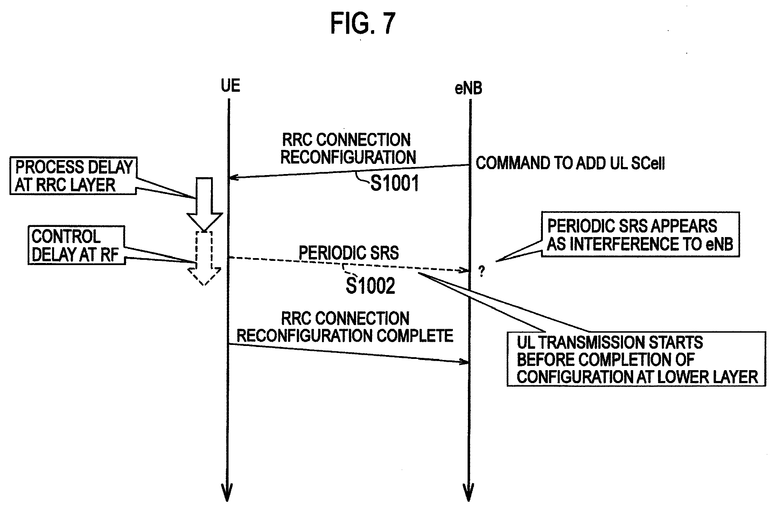

Specifically, as shown in Fig. 7, in step S1001, the radio base station eNB transmits an "RRC connenction reconfiguration" to the mobile station UE which commands it to add a "UL Scell" .

In response to the "RRC connenction reconfiguration", the mobile station UE performs a configuring process at the RRC layer and then performs a configuring process at the RF.

Here, the mobile station UE may possibly transmit a signal such as "periodic SRS" to the radio base station eNB in step S1002 after the completion of the configuring process at the RRC layer but before the completion of the configuring process at the RF.

In that case, a problem arises in that the signal may appear as interference in the uplink to the radio base station eNB.

Thus, the present invention has been made in view of the above problem, and an object thereof is to provide a mobile station and a radio base station capable of avoiding the occurrence of interference in an uplink in a case of adding a "UL Scell" while CA is being performed using a Pcell and a "DL Scell."

A first feature of the present invention is summarized as a mobile station configured such that, in a case where the mobile station adds an uplink secondary cell while performing carrier aggregation by using a primary cell and a downlink secondary cell, the mobile station suspends signal transmission using the uplink secondary cell for a predetermined length of time even if the downlink secondary cell is in an active state.

A second feature of the present invention is summarized as a mobile station configured such that, in a case where the mobile station adds an uplink secondary cell while performing carrier aggregation by using a primary cell and a downlink secondary cell, the mobile station suspends signal transmission using the uplink secondary cell until receiving an activation command even if the downlink secondary cell is in an active state.

A third feature of the present invention is summarized as a mobile station configured such that, in a case where the mobile station adds an uplink secondary cell while performing carrier aggregation by using a primary cell and a downlink secondary cell, the mobile station suspends signal transmission using the uplink secondary cell until receiving an uplink grant from a radio base station even if the downlink secondary cell is in an active state.

A fourth feature of the present invention is summarized as a radio base station configured such that, in a case where the radio base station commands a mobile station to add an uplink secondary cell while the mobile station is performing carrier aggregation by using a primary cell and a downlink secondary cell, the radio base station deactivates the downlink secondary cell.

A fifth feature of the present invention is summarized as a radio base station configured such that, in a case where the radio base station commands a mobile station to add an uplink secondary cell while the mobile station is performing carrier aggregation by using a primary cell and a downlink secondary cell, the radio base station removes the downlink secondary cell and then adds an uplink and downlink secondary cell.

A sixth feature of the present invention is summarized as a radio base station configured such that, in a case where the radio base station commands a mobile station to add an uplink secondary cell while the mobile station is performing carrier aggregation by using a primary cell and a downlink secondary cell, the radio base station initiates intra-cell handover.

### BRIEF DESCRIPTION OF THE DRAWINGS

[Fig. 1] Fig. 1 is an overall configurational view of a mobile communication system according to a first embodiment of the present invention.
[Fig. 2] Fig. 2 is a functional block diagram of a mobile station UE according to the first embodiment of the present invention.
[Fig. 3] Fig. 3 is a flowchart showing the operation of the mobile station UE according to the first embodiment of the present invention.
[Fig. 4] Fig. 4 is a functional block diagram of a radio base station eNB according to a second embodiment of the present invention.
[Fig. 5] Fig. 5 is a flowchart showing the operation of the radio base station eNB according to the second embodiment of the present invention.
[Fig. 6] Fig. 6 is a diagram for describing a conventional technique.
[Fig. 7] Fig. 7 is a diagram for describing a conventional technique.

### MODES FOR CARRYING OUT THE INVENTION

### (Mobile Communication System According to First Embodiment of Present Invention)

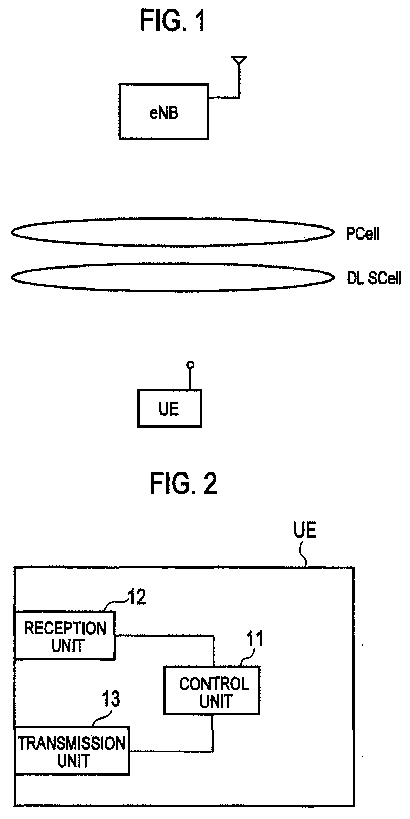

A mobile communication system according to a first embodiment of the present invention will be described with reference to Figs. 1 to 3. Although the mobile communication system according to this embodiment will be described by exemplarily presenting an LTE mobile communication system, the present invention is also applicable to other mobile communication systems than LTE mobile communication systems.

As shown in Fig. 1, the mobile communication system according to this embodiment includes a radio base station eNB and a mobile station UE.

Here, in the mobile communication system according to this embodiment, the mobile station UE is configured to be capable of performing CA by using a Pcell and an Scell ("DL Sell" or "UL Scell") under the radio base station eNB.

Meanwhile, in the mobile communication system according to this embodiment, the radio base station eNB may configure a Pcell and only a "DL Scell" or a Pcell and both a "DL Scell" and a "UL Scell" for the mobile station UE.

Note that this embodiment will be described by exemplarily presenting a case where a Pcell and only a "DL Scell" are configured for the mobile station UE as shown in Fig. 1.

As shown in Fig. 2, the mobile station UE according to this embodiment includes a control unit 11, a reception unit 12, and a transmission unit 13.

The control unit 11 is configured to perform various control processes related to communication with the radio base station eNB (e.g. control related to CA). The reception unit 12 is configured to receive various signals from the radio base station eNB. The transmission unit 13 is configured to transmit various signals to the radio base station eNB.

For example, the reception unit 12 is configured to receive a command to add a "UL Scell" from the radio base station eNB while the control unit 11 is performing CA by using the Pcell and the "DL Scell".

In this case, the transmission unit 13 may be configured to follow the command but suspend signal transmission using the added "UL Scell" for a predetermined length of time even if the "DL Scell" is in an active state.

Alternatively, in the above case, the transmission unit 13 may be configured to follow the command but suspend signal transmission using the added "UL Scell" until receiving an activation command for the "UL Scell" from the radio base station eNB even if the "DL Scell" is in the active state.

Still alternatively, in the above case, the transmission unit 13 may be configured to follow the command but suspend signal transmission using the added "UL Scell" until receiving a "UL grant" from the radio base station eNB even if the "DL Scell is in the active state.

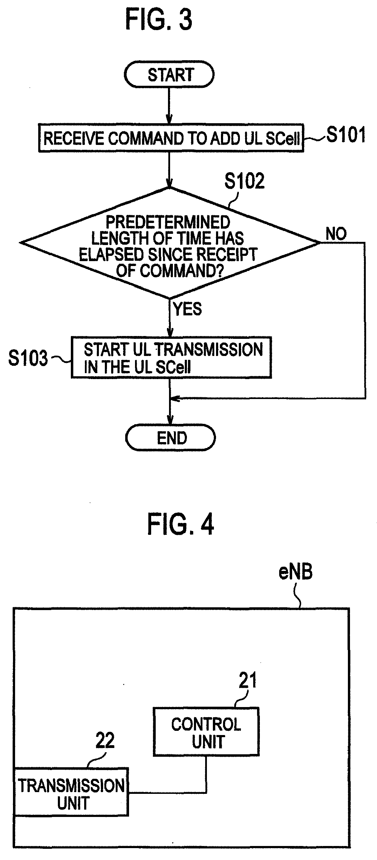

One example of the operation of the mobile station UE according to this embodiment will be described below with reference to Fig. 3.

As shown in Fig. 3, in step S101, the mobile station UE receives a command to add a "UL Scell" from the radio base station eNB while performing CA by using the Pcell and the "DL Scell". Then, in step S102, the mobile station UE determines whether or not the predetermined length of time has elapsed since the receipt of the command.

If "Yes, " this operation proceeds to step S103. If "No", this operation ends.

In step S103, the mobile station UE performs signal transmission using the added "UL Scell".

According to the mobile communication system according to this embodiment, in a case where a "UL Scell" is added while the mobile station UE is performing CA by using a Pcell and a "DL Scell" , the mobile station UE initiatively delays the start of signal transmission using the "UL Scell". As a result, the occurrence of interference in the uplink can be avoided.

### (Mobile Communication System According to Second Embodiment of Present Invention)

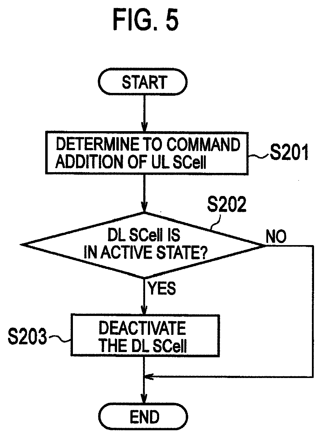

A mobile communication system according to a second embodiment of the present invention will be described with reference to Figs. 4 and 5 by focusing on the difference from the mobile communication system according to the first embodiment described above.

As shown in Fig. 4, a radio base station eNB according to this embodiment includes a control unit 21 and a transmission unit 22.

The control unit 21 is configured to perform various control processes related to communication with a mobile station UE (e.g. control related to CA). The transmission unit 22 is configured to transmit various signals to the mobile station UE.

For example, the transmission unit 22 may be configured such that, in a case of commanding the mobile station UE to add a "UL Scell" while the mobile station UE is performing CA by using a Pcell and a "DL Scell", the transmission unit 22 deactivates the "DL Scell."

In this case, the transmission unit 22 may be configured to superimpose a "deactivation command" that commands deactivation of the "DL Scell" on an "RRC Connection Reconfiguration" that commands addition of the "UL Scell".

Alternatively, the transmission unit 22 maybe configured such that, in a case of commanding the mobile station UE to add a "UL Scell" while the mobile station UE is performing CA by using the Pcell and the "DL Scell", the transmission unit 22 removes the "DL Scell" and then adds a "UL/DL Scell".

Here, the "UL/DL Scell" is a general Scell capable of both uplink communication and downlink communication.

In this case, the transmission unit 22 may be configured to use the same RRC message (e.g. "RRC Connection Reconfiguration") to command the mobile station UE to remove the "DL Scell" and add the "UL/DL Scell".

Alternatively, the transmission unit 22 maybe configured such that, in a case of commanding the mobile station UE to add a "UL Scell while the mobile station UE is performing CA by using the Pcell and the "DL Scell, " the transmission unit 22 initiates intra-cell handover".

Note that, during the intra-cell handover, the mobile station UE is prescribed to deactivate the configured Scell. Thus, it is possible to deactivate the Scell without transmitting MAC signaling separately from the RRC message.

One example of the operation of the radio base station eNB according to this embodiment will be described below with reference to Fig. 5.

As shown in Fig. 5, in step S201, the radio base station eNB determines to add a "UL Scell" for the mobile station UE performing CA by using the Pcell and the "DL Scell". Then, in step S202, the radio base station eNB determines whether or not the "DL Scell" is in the active state.

If "Yes", this operation proceeds to step S203. If "No", this operation ends.

In step S203, the radio base station eNB commands the mobile station UE to deactivate the "DL Scell".

According to the mobile communication system according to this embodiment, in a case of adding a "UL Scell" while the mobile station UE is performing CA by using a Pcell and a "DL Scell" , the radio base station eNB initiatively deactivates the "DL Scell". As a result, the occurrence of interference in the uplink can be avoided.

The features of this embodiment may also be expressed as follows.

A first feature of this embodiment is summarized a mobile station UE configured such that, in a case where the mobile station UE adds an "UL Scell (uplink secondary cell)" while performing CA (carrier aggregation) by using a Pcell (primary cell) and a "DL Scell (downlink secondary cell)", the mobile station UE suspends signal transmission using the "UL Scell" for a predetermined length of time even if the "DL Scell" is in an active state.

A second feature of this embodiment is summarized a mobile station UE configured such that, in a case where the mobile station UE adds an "UL Scell" while performing CA by using a Pcell and a "DL Scell", the mobile station UE suspends signal transmission using the "UL Scell" until receiving an activation command even if the "DL Scell" is in an active state.

A third feature of this embodiment is summarized a mobile station UE configured such that, in a case where the mobile station UE adds an "UL Scell" while performing CA by using a Pcell and a "DL Scell", the mobile station UE suspends signal transmission using the "UL Scell" until receiving an "UL grant (uplink grant) " from a radio base station even if the "DL Scell" is in an active state.

A fourth feature of this embodiment is summarized a radio base station eNB configured such that, in a case where the radio base station eNB commands a mobile station UE to add an "UL Scell" while the mobile station UE is performing CA by using a Pcell and a "DL Scell", the radio base station eNB deactivates the "DL Scell".

A fifth feature of this embodiment is summarized a radio base station eNB configured such that, in a case where the radio base station eNB commands a mobile station UE to add an "UL Scell" while the mobile station UE is performing CA by using a Pcell and a "DL Scell", the radio base station eNB removes the "DL Scell" and then adds a "UL/DL Scell (uplink and downlink secondary cell)".

The fifth feature of this embodiment is summarized a radio base station eNB configured such that, in a case where the radio base station eNB commands a mobile station UE to add an "UL Scell" while the mobile station UE is performing CA by using a Pcell and a "DL Scell", the radio base station eNB initiates intra-cell handover.

Here, the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-213856 (filed on October 11, 2013) is incorporated by reference in the present specification.

### INDUSTRIAL APPLICABILITY

As described above, the present invention can provide a mobile station and a radio base station capable of avoiding the occurrence of interference in an uplink in a case of adding a "UL Scell" while CA is being performed using a Pcell and a "DL Scell."

### EXPLANATION OF THE REFERENCE NUMERALS

- UE: mobile station
- eNB: radio base station
- 11, 21: control unit
- 12: reception unit
- 13, 22: transmission unit

## Claims

1. A mobile station configured such that, in a case where the mobile station adds an uplink secondary cell while performing carrier aggregation by using a primary cell and a downlink secondary cell, the mobile station suspends signal transmission using the uplink secondary cell for a predetermined length of time even if the downlink secondary cell is in an active state.

2. A mobile station configured such that, in a case where the mobile station adds an uplink secondary cell while performing carrier aggregation by using a primary cell and a downlink secondary cell, the mobile station suspends signal transmission using the uplink secondary cell until receiving an activation command even if the downlink secondary cell is in an active state.

3. A mobile station configured such that, in a case where the mobile station adds an uplink secondary cell while performing carrier aggregation by using a primary cell and a downlink secondary cell, the mobile station suspends signal transmission using the uplink secondary cell until receiving an uplink grant from a radio base station even if the downlink secondary cell is in an active state.

4. A radio base station configured such that, in a case where the radio base station commands a mobile station to add an uplink secondary cell while the mobile station is performing carrier aggregation by using a primary cell and a downlink secondary cell, the radio base station deactivates the downlink secondary cell.

5. A radio base station configured such that, in a case where the radio base station commands a mobile station to add an uplink secondary cell while the mobile station is performing carrier aggregation by using a primary cell and a downlink secondary cell, the radio base station removes the downlink secondary cell and then adds an uplink and downlink secondary cell.

6. A radio base station configured such that, in a case where the radio base station commands a mobile station to add an uplink secondary cell while the mobile station is performing carrier aggregation by using a primary cell and a downlink secondary cell, the radio base station initiates intra-cell handover.
